# EUROPÄISCHE PATENTANMELDUNG

(11) **EP 2 196 115 A1**
(43) Veröffentlichungstag der Anmeldung: **16.06.2010**
(21) Anmeldenummer: 08405303.2
(22) Anmeldetag: 12.12.2008
(51) Int. Cl.: A47J 31/36

(54) **Antrieb für eine Kaffeebrühvorrichtung und Kaffeebrühvorrichtung**

(71) Anmelder: Jura Elektroapparate AG, 4626 Niederbuchsiten (CH)
(72) Erfinder: Büttiker, Philipp, 4625 Oberbuchsiten (CH)
(74) Vertreter: EGLI-EUROPEAN PATENT ATTORNEYS

(57) **Zusammenfassung**

Die Erfindung betrifft einen Antrieb (1) für eine Kaffeebrühvorrichtung, umfassend: ein erstes Zahnrad (10) mit einem Innengewinde (11), über welches dieses erste Zahnrad (10) an einem Aussengewinde (21) eines Führungszylinders (20) drehbar gelagert ist, so dass das erste Zahnrad (10) bei einer Drehung entlang einer Zylinderachse (22) des Führungszylinders (20) bewegbar ist; ein zweites Zahnrad (30), welches zum Antreiben des ersten Zahnrades (10) entlang der Zylinderachse (22) mit diesem ersten Zahnrad (10) in Eingriff steht; ein Gehäuse (50), in welchem das erste Zahnrad (10) aufgenommen ist; einem Brühkolben (40), welcher an das Gehäuse (50) gekoppelt ist, so dass dieser Brühkolben (40) zusammen mit dem ersten Zahnrad (10) entlang der Zylinderachse (22) bewegbar ist. Der Antrieb (1) umfasst eine Linearführung (80) zur Führung des Gehäuses (50), welche in einem Abstand parallel zur Zylinderachse (22) verläuft und mit welcher das Gehäuse (50) so in Eingriff steht, dass eine Bewegung des Gehäuses (50) gegenüber der Linearführung (80) in einer zur Zylinderachse (22) radialen Richtung verhindert ist, wobei eine Drehachse (32) des zweiten Zahnrades (30) in einem vorgegebenen Abstand relativ zu der Linearführung (80) angeordnet ist.

## Beschreibung

Die Erfindung betrifft einen Antrieb für eine Kaffeebrühvorrichtung nach dem Oberbegriff des Anspruchs 1 und eine Kaffeebrühvorrichtung mit einem solchen Antrieb nach Anspruch 19.

Aus der Patentschrift EP 0 559 620 B1 ist eine Brühvorrichtung für Kaffee mit einem Brühkolben, einem Brühzylinder und einem Ausstosskolben bekannt. Die Brühvorrichtung wird in sogenannten Kaffeevollautomaten eingesetzt. In der Brühvorrichtung wird gemahlenes Kaffeepulver mit heissem Wasser aufgebrüht, welches durch Zuführungsorgane in den Brühraum geleitet wird. Durch Abflussorgane wird der im Brühzylinder gebrühte Kaffee zu einem Kaffeebehälter geführt. Nach dem Brühvorgang wird das Restwasser aus dem Kaffeepulver ausgepresst und der im Brühzylinder zurückbleibende Trester durch den Ausstosskolben ausgestossen. Die Brühvorrichtung besitzt aufgrund ihrer Konstruktion ein relativ grosses (und gemessen an heutigen Ansprüche hinsichtlich Kaffeevollautomaten zu grosses) Volumen. Zusätzlich entwickelt die Brüheinheit während des Betriebes eine relativ hohe Lärmemission, die insbesondere auf den Betrieb einer Antriebsvorrichtung zurückzuführen ist, welche dazu dient, verschiedene bewegbare Teile, insbesondere den Brühkolben, zu bewegen. Die Antriebsvorrichtung umfasst mehrere miteinander verzahnte Zahnräder, von denen eines mittels eines Antriebsmotors antreibbar ist und ein anderes derart an den Brühkolben gekoppelt ist, dass der Brühkolben mithilfe des Antriebsmotors längs einer Achse hin und her bewegbar ist.

Es ist Aufgabe der vorliegenden Erfindung, die beschriebenen Nachteile zu vermeiden und einen geräuschärmeren Antrieb für eine Kaffeebrühvorrichtung zur Verfügung zu stellen, der konstruktiv einfach und kompakt ausgestaltet, sowie kostengünstig herstellbar ist.

Diese Aufgabe wird durch einen Antrieb nach dem kennzeichnenden Teil des Anspruchs 1 gelöst.

Der Antrieb umfasst: ein erstes Zahnrad mit einem Innengewinde, über welches dieses erste Zahnrad an einem Aussengewinde eines Führungszylinders drehbar gelagert ist, so dass das erste Zahnrad bei einer Drehung entlang einer Zylinderachse des Führungszylinders bewegbar ist; ein zweites Zahnrad, welches zum Antreiben des ersten Zahnrades entlang der Zylinderachse mit diesem ersten Zahnrad in Eingriff steht; ein Gehäuse, in welchem das erste Zahnrad aufgenommen ist; und einen Brühkolben, welcher an das Gehäuse gekoppelt ist, so dass dieser Brühkolben zusammen mit dem ersten Zahnrad entlang der Zylinderachse bewegbar ist.

Gemäss der Erfindung umfasst der Antrieb eine Linearführung für das Gehäuse, welche Linearführung in einem Abstand parallel zur Zylinderachse verläuft und mit welcher das Gehäuse so in Eingriff steht, dass eine Bewegung des Gehäuses gegenüber der Linearführung in einer zur Zylinderachse radialen Richtung verhindert ist. Weiterhin ist eine Drehachse des zweiten Zahnrades in einem vorgegebenen Abstand relativ zu der Linearführung angeordnet.

Unter dem Begriff "Gehäuse, in welchem das erste Zahnrad aufgenommen ist" soll im Rahmen dieser Beschreibung ganz allgemein ein Bauteil verstanden werden, welches die Funktion einer Kopplung zwischen dem ersten Zahnrad und dem Brühkolben wahrnimmt und dazu das erste Zahnrad wenigstens teilweise umschliesst. Dabei kann das "Gehäuse" auch als eine Art Käfig ausgeführt sein, der das erste Zahnrad umschliesst. Der Käfig kann mehrere, teils grosse Lochungen aufweisen.

Dadurch, dass das Gehäuse, welches das erste Zahnrad umgibt, bei einer Bewegung entlang der Zylinderachse des Führungszylinders durch die Linearführung linear geführt ist, wird verhindert, dass sich das Gehäuse gegenüber der Linearführung in einer zur Zylinderachse radialen Richtung über bestimmte (vorgegebene) Toleranzen hinaus bewegen kann. Dadurch, dass zusätzlich die Drehachse des zweiten Zahnrades in einem vorgegebenen Abstand relativ zu der Linearführung angeordnet ist, wird erreicht, dass die räumliche Lage des zweiten Zahnrades bezüglich der Zylinderachse (innerhalb vorgegebener Toleranzen) konstant gehalten und somit stabilisiert wird, wenn durch Antreiben des zweiten Zahnrades (z.B. mittels eines Motors) das zweite Zahnrad in eine Drehung versetzt wird und aufgrund dieser Drehung das erste Zahnrad angetrieben und somit ebenfalls in eine Drehung versetzt wird und dabei - wegen der Verzahnung zwischen dem Innengewinde des ersten Zahnrades und dem Aussengewinde des Führungszylinders - in Längsrichtung der Zylinderachse bewegt wird. Radiale Schwingungen des zweiten Zahnrades bezüglich der Zylinderachse und somit auch radiale Schwingungen des zweiten Zahnrades bezüglich des ersten Zahnrades werden so im Betrieb des Antriebs unterdrückt bzw. zumindest limitiert. Dies verbessert die Laufruhe des Antriebs und reduziert Lärmemissionen im Betrieb.

Gemäss einer Ausführungsform des Antriebs ist zwischen dem Gehäuse und dem ersten Zahnrad ein Drehlager ausgebildet ist, welches eine radiale Bewegung des Gehäuses (innerhalb vorgegebener Toleranzen) gegenüber dem ersten Zahnrad verhindert. Durch das Drehlager wird das erste Zahnrad an dem Gehäuse geführt, wodurch ein radiales und axiales Schlagen oder Schwingen des ersten Zahnrades und eine damit verbundene Geräuschentwicklung vermieden wird. Auf diese Weise werden radiale Schwingungen des zweiten Zahnrades relativ zum ersten Zahnrad zusätzlich gemindert und die Laufruhe der beiden Zahnräder relativ zueinander verbessert.

Gemäss einer vorteilhaften Ausführungsform sind das Gehäuse und das erste Zahnrad so geformt und angepasst, dass diese das Drehlager bilden.

Eine konstruktiv besonders einfache Gestaltung des Drehlagers sieht dabei vor, dass dieses durch einen umlaufenden Anschlag am Gehäuse gebildet wird, gegen den ein zylindrischer Fortsatz des ersten Zahnrads anliegt. Natürlich ist es aber auch möglich, andere Lagerarten zu wählen, wenn dies im Rahmen der geforderten Dimensionierung des Antriebs akzeptabel ist, z.B. ein Kugellager, ein Wälzlager oder ein Zwischenstück, welches zumindest an einer der Reibflächen einen niedrigen Reibungswert aufweist.

Ein besonders geräuscharmer Lauf des Gehäuses und des ersten Zahnrads wird dadurch erzielt, dass diese gegenseitige Kontaktflächen aufweisen, die im Vergleich zu ihrem Grundmaterial mit reibungsärmeren Oberflächen versehen sind. Grundsätzlich ist es aber auch möglich, beide Teile aus einem Material herzustellen, das schon einen niedrigen Reibungswert aufweist. Durch diesen Reibungswert werden Schwingungen und damit Reibungsgeräusche reduziert.

Eine zusätzliche Geräuschminderung kann dadurch erreicht werden, dass das Gehäuse das erste Zahnrad vollständig umschliesst, mit Ausnahme einer Öffnung, welche für den Eingriff des zweiten Zahnrades erforderlich ist. Durch die vollständige Umschliessung werden Geräusche in dem Gehäuse gehalten. Das Gehäuse kann durch die Verwendung geräuschdämmender Materialien oder durch geeignete Bauformen den Schall zusätzlich dämpfen. Ausserdem verleiht die hohlkörperartige Grundform, welche sich durch die möglichst vollständige Umschliessung des Zahnrades ergibt, dem Gehäuse Stabilität, wodurch ein Schlagen oder Schwingen vermindert wird.

In einer weiteren vorteilhaften Ausgestaltung ist das Gehäuse an den Brühkolben über eine Metallplatte, die sich in einer radial zur Zylinderachse verlaufenden Ebene erstreckt, gekoppelt. Weiter kann die Metallplatte wenigstens einen Teil des Gehäuses und/oder des Brühkolbens durchdringen. Diese Kopplung über eine Metallplatte hat gegenüber einer konventionellen (beispielsweise aus EP 0 559 620 B1 bekannten) Verbindung zwischen Brühkolben und Gehäuse mittels eines Kunststoffteils verschiedene Vorteile. Da Kunststoffe in der Regel im Vergleich zu Metallen wie Stahl oder Aluminium eine geringere Steifigkeit aufweisen, könnte ein Kunststoffteil, welches als Verbindung zwischen Brühkolben und Gehäuse geeignet ist und dabei einerseits ein geringes Gewicht und eine hohe Steifigkeit aufweist, bevorzugt als Hohlkörper, beispielsweise als ein Rohr mit einem rechteckigen Profil, ausgebildet sein. Ein derartiger Hohlkörper aus Kunststoff hat ein relativ grosses Querschnittsprofil und führt zu einer relativ grossen Bauhöhe des Antriebs. Weiterhin neigen die Wände eines derartigen Hohlkörpers in der Regel zu hörbaren Schwingungen. Durch die grössere Steifigkeit des Metalls ist es möglich, die Verbindung zwischen Brühkolben und Gehäuse nicht als Hohlkörper, sondern als massive Metallplatte auszuführen. Dadurch wird (im Vergleich zu einer Kopplung durch ein Kunststoffteil) eine schwingungsarme Kopplung des Kolbens an das Gehäuse erzielt. Gleichzeitig weist die Metallplatte in Richtung der Zylinderachse eine geringere Bauhöhe auf, wodurch eine Verkleinerung der Brüheinheit erzielt werden kann. Eine gleichzeitig hohe Stabilität und Geräuschminderung der Verbindung wird dadurch erreicht, dass die Metallplatte das Gehäuse und/oder den Brühkolben durchdringt.

In einer besonders vorteilhaften Ausgestaltung weist der Antrieb eine Basis auf, mit der ein unteres Ende der Linearführung und ein unteres Ende des Führungszylinders starr verbunden ist. Eine starre Verbindung verhindert eine Schwingungsbewegung dieser Bauteile gegeneinander und damit die Geräuschentwicklung zwischen diesen. Zusätzlich wird dadurch eine sehr genaue parallele Führung des Gehäuses gegenüber der Zylinderachse gewährleistet.

In einer besonders vorteilhaften Ausgestaltung ist ein unteres Ende einer Drehachse des zweiten Zahnrades an der Basis und ein oberes Ende dieser Drehachse an einem Ausleger der Linearführung befestigt. Die Befestigung der Drehachse des zweiten Zahnrades zwischen Basis und Ausleger der Linearführung sorgt dafür, dass die Drehachse des zweiten Zahnrades an mindestens zwei Punkten in einem vorgegebenen Abstand relativ zur Linearführung gehalten ist. Diese Anordnung gibt dem zweiten Zahnrad eine grosse Stabilität gegenüber der Zylinderachse und gegenüber dem ersten Zahnrad. Insbesondere Verkippungen und Verbiegungen der Drehachse des zweiten Zahnrades und damit verbundene Schwingungen des zweiten Zahnrades relativ zur Linearführung bzw. dem Gehäuse bzw. dem ersten Zahnrand können so besonders wirkungsvoll reduziert bzw. unterdrückt werden. Somit wird ein optimales und geräuscharmes Ineinandergreifen der beiden Zahnräder erreicht.

In einer weiteren vorteilhaften Ausgestaltung verläuft die Linearführung an einer Seite des Gehäuses, die dem zweiten Zahnrad zugewandt ist. Somit kann einem Verkanten des Gehäuses gegenüber der Linearführung entgegengewirkt werden und die Laufruhe des Antriebs verbessert werden.

Die Gefahr dieses Verkantens des Gehäuses gegenüber der Linearführung kann auch dadurch gemindert werden, dass die Linearführung mindestens eine gerade Führungsstange umfasst, die wenigstens teilweise von dem Gehäuse umgriffen ist. Die Linearführung für das Gehäuse kann zusätzlich stabilisiert werden, wenn die Linearführung mehr als eine Führungsstange umfasst. Dadurch, dass das Gehäuse beispielsweise an zwei geraden Führungsstangen geführt ist, wird das Gehäuse bezüglich einer weiteren potentiellen Kippachse stabilisiert, was die Funktion des Antriebs zusätzlich verbessert.

In einer besonders bevorzugten Ausführungsform, weisen die jeweiligen Führungsstangen eine axial verlaufende Nut auf, in der ein jeweils am Gehäuse ausgebildeter Vorsprung eingreift. Die Nut und die am Gehäuse ausgebildeten Vorsprünge sind dabei hinsichtlich ihrer Form und Grösse derart aufeinander abgestimmt, dass ein Verkanten des Gehäuses an der Linearführung (über vorgegebene Toleranzen hinaus) verhindert wird. Weiter können dadurch auch relativ grosse Kräfte zwischen dem Gehäuse und der Linearführung übertragen werden.

In besonders vorteilhafter Weise ist dabei die Nut in Richtung des zweiten Zahnrades geöffnet. Dadurch werden die zugeordneten Vorsprünge in die Nut gedrückt, sobald eine Kraftübertragung von dem zweiten Zahnrad auf das erste Zahnrad stattfindet, d.h. das erste Zahnrad angetrieben wird. Dies bewirkt, dass eine sozusagen selbststabilisierende Kopplung zwischen dem Gehäuse, in dem das erste Zahnrad gelagert ist, und der Linearführung unter Krafteinwirkung entsteht.

In einer weiteren Ausführungsform des Antriebs ist ein unteres Ende einer Drehachse des zweiten Zahnrades an der Basis des Antriebs und ein oberes Ende dieser Drehachse an einem Ausleger befestigt, welcher starr mit mindestens einer der jeweiligen Führungsstangen verbunden ist. Dadurch wird erreicht, dass der Abstand zwischen der Zylinderachse des Führungszylinders bzw. der Drehachse des ersten Zahnrades und der Drehachse des zweiten Zahnrades konstant gehalten ist, unabhängig von der Lage des Brühkolbens bzw. des ersten Zahnrades entlang der Zylinderachse. Die Drehachsen des ersten Zahnrads und des zweiten Zahnrads werden so relativ zueinander stabilisiert und Schwingungen der beiden Zahnräder in einer zu einer der jeweiligen Drehachsen radialen Richtung verhindert. Dadurch wird die Laufruhe des Antriebs verbessert und eine konstante Kraftübertragung der beiden Zahnräder über der ganzen Hubbewegung ergibt.

Dadurch, dass der Abstand der Drehachsen des ersten und des zweiten Zahnrades mit grosser Präzision innerhalb vorgegebener Toleranzen kontrolliert ist, kann der Zahnradmodul (definiert als Verhältnis zwischen dem Durchmesser des jeweiligen Zahnrades und der Anzahl der Zähne des Zahnrades) relativ klein gewählt werden, was sich wiederum geräuschmindernd auswirkt.

In einer zusätzlichen vorteilhaften Ausgestaltung weist die Linearführung ein U- oder H-förmiges Querschnittsprofil auf. Derartig geformte Querschnittsprofile sind für eine gegenüber beispielsweise Rundprofilen erhöhte Biegesteifigkeit und damit Schwingungsarmut bekannt.

Eine konstruktiv besonders bevorzugte Ausgestaltung sieht vor, dass das Gehäuse einstückig daran ausgebildete Flansche aufweist, über welche es mit der Linearführung in Eingriff steht. Durch die Ausbildung der Flansche wird eine zusätzliche Öffnung des Gehäuses gegenüber der Umgebung vermieden, durch welche Öffnung Schall aus dem Inneren des Gehäuses in die Umgebung austreten könnte.

Die Geräuschentwicklung kann zudem verringert werden, indem der Antrieb ein Übersetzungsverhältnis zwischen dem ersten Zahnrad und dem zweiten Zahnrad in einem Bereich zwischen 4 und 4,5 vorsieht. Ein solches Übersetzungsverhältnis ermöglicht eine verbesserte Kraftübertragung zwischen einem Motor und dem Brühkolben, wobei der Antrieb mit einer tieferen Drehzahl betrieben werden kann, was eine geringe Geräuschentwicklung verursacht.

Die vorstehende Aufgabe wird auch durch eine Kaffeebrühvorrichtung nach dem kennzeichnenden Teil des Anspruchs 19 gelöst.

Die schon in Verbindung mit dem Antrieb beschriebenen Vorteile werden auch durch die erfindungsgemässe Kaffeebrühvorrichtung erzielt.

Bevorzugte Weiterbildungen dieser Kaffeebrühvorrichtung sind in den abhängigen Patentansprüchen angegeben.

Bevorzugte Weiterbildungen des erfindungsgemässen Antriebs sind in den abhängigen Patentansprüchen angegeben.

So ist in einer bevorzugten Ausgestaltung vorgesehen, dass der Antrieb über ein Dämpfungselement an einem Grundträger befestigt ist. Durch das Dämpfungselement wird verhindert, dass der Grundträger oder weitere Teile akustisch zum Schwingen angeregt werden oder gar als Resonanzkörper wirken.

Bevorzugt besteht dabei das Dämpfungselement aus einem Gummimaterial. Durch ein Gummielement kann eine kostengünstig und auf den Frequenzbereich des Schalls abgestimmte Dämpfung erreicht werden.

Weitere Einzelheiten der Erfindung und insbesondere beispielhafte Ausführungsformen des erfindungsgemässen Antriebs werden im Folgenden anhand der beigefügten Zeichnungen erläutert. Gleiche oder gleichwirkende Teile sind mit gleichen Bezugsziffern versehen. Es zeigen:
- Fig. 1: einen Längsschnitt durch eine Kaffeebrühvorrichtung mit einem erfindungsgemässen Antrieb in einer seitlichen Ansicht;
- Fig. 2: eine perspektivische Darstellung der Kaffeebrühvorrichtung der Fig. 1 in einer Ansicht von schräg vorne;
- Fig. 3: eine perspektivische Darstellung der Kaffeebrühvorrichtung wie in Fig. 2, jedoch aus einer anderen Perspektive;
- Fig. 4: eine Draufsicht auf die Kaffeebrühvorrichtung der Fig. 1 bei geöffnetem Gehäuse.

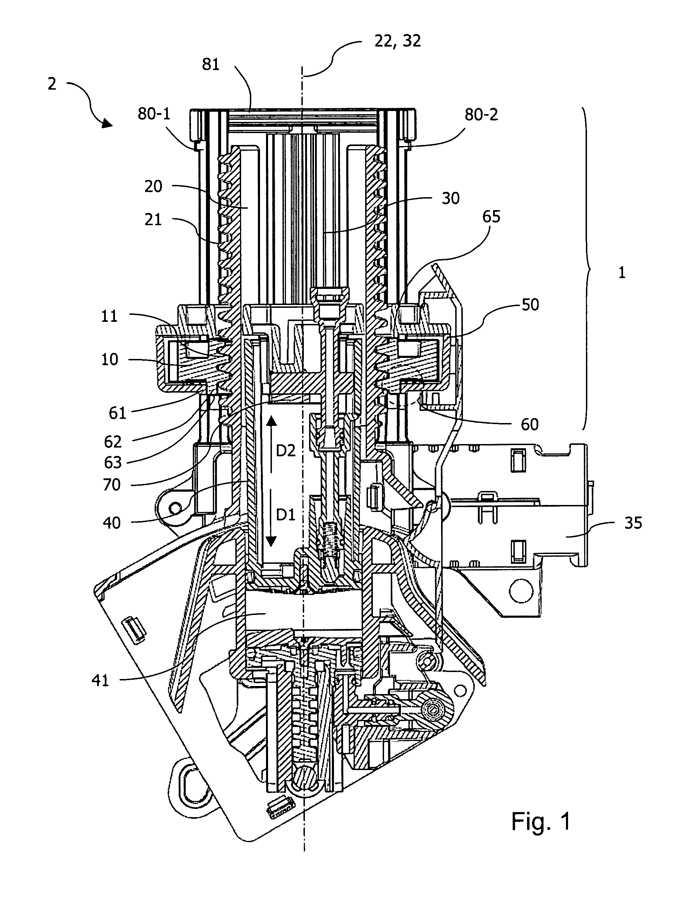

Fig. 1 zeigt einen Längsschnitt durch eine Kaffeebrühvorrichtung 2 mit einem erfindungsgemässen Antrieb 1 in einer seitlichen Ansicht. Der Antrieb 1 weist dabei zunächst ein erstes Zahnrad 10 mit einem Innengewinde 11 auf. Dieses Innengewinde 11 ist drehbar an einem Aussengewinde 21 eines Führungszylinders 20 gelagert, so dass es entlang einer Zylinderachse 22 bewegbar ist, sobald es in Drehung versetzt wird. Im vorliegenden Fall bildet die Zylinderachse 22 die Drehachse des ersten Zahnrads 10. Das erste Zahnrad steht dabei in Eingriff mit einem zweiten Zahnrad 30, welches das erste Zahnrad 10 antreibt und dessen Drehachse 32 in Blickrichtung hinter der Zylinderachse 22 liegt. Dazu wird das zweite Zahnrad 30 wiederum von einem Motor 35 mit einem Ritzelzahnrad 35-1 angetrieben. Das erste Zahnrad 10 ist mit einem Brühkolben 40 gekoppelt, der durch das erste Zahnrad 10 entlang der Zylinderachse 22 auf und ab bewegbar ist. In der vorliegenden Figur befindet sich der Brühkolben 40 in einer Brühstellung, d.h. der Kolben 40 übt Druck auf den in einer Brühkammer 41 befindlichen Kaffee aus. Der Brühkoben 40 ist dabei über ein Gehäuse 50 mit dem ersten Zahnrad 10 gekoppelt, welches das Zahnrad 10 umschliesst.

Um radiale Schwingungen dieses Gehäuses 50 gegenüber dem ersten Zahnrad 10 zu verhindern, ist zwischen dem ersten Zahnrad 10 und dem Gehäuse 50 ein Drehlager 60 vorgesehen, das aus einem umlaufenden Anschlag 61 besteht, der an dem Gehäuse 50 ausgebildet ist, und gegen den ein zylindrischer Fortsatz 62 des ersten Zahnrads 10 anliegt. Auf diese Weise sind sowohl das erste Zahnrad 10 als auch das Gehäuse 50 entlang der Zylinderachse 22 radial bezüglich der Zylinderachse geführt. Dadurch werden Schwingungen des ersten Zahnrads 10 und des Gehäuses 50 radial zur Zylinderachse 22 wirkungsvoll gedämpft bzw. vermieden, was zu einer erheblichen Geräuschreduktion des Antriebs führt.

Eine Anbindung des Kolbens 40 an das Gehäuse 50 sieht eine Metallplatte 70 vor, die eine bislang übliche, deutlich schwingungsanfälligere Kunststoffhalterung (beispielsweise in Form eines Hohlkörpers mit rechteckigem Querschnittsprofil, wie aus EP 0 559 620 B1 bekannt) ersetzt, die zudem einen grösseren Bauraum erfordert.

Wird das erste Zahnrad 10 derart um die Drehachse 32 gedreht, dass es sich am Aussengewinde 21 entlang der Zylinderachse 22 in Richtung auf die Brühkammer 41 (d.h. in Richtung des Pfeils D1 in Fig. 1) bewegt, so ist ein Oberflächenbereich 63 des zylindrischen Fortsatzes 62 in Kontakt mit der Metallplatte 70 und drückt gegen die Metallplatte 70. Auf diese Weise ist das erste Zahnrad 10 bei einer Bewegung in Richtung des Pfeils D1 an das Gehäuse 50 gekoppelt. Wird das erste Zahnrad 10 derart um die Drehachse 32 gedreht, dass es sich am Aussengewinde 21 entlang der Zylinderachse 22 von der Brühkammer 41 weg (d.h. entgegengesetzt zur Richtung des Pfeils D1 bzw. in Richtung des Pfeils D2 in Fig. 1) bewegt, so ist ein von der Brühkammer 41 abgewandter Oberflächenbereich 65 des ersten Zahnrades 10 in Kontakt mit dem Gehäuse 50 und drückt gegen das Gehäuse 50. Auf diese Weise ist das erste Zahnrad 10 bei einer Bewegung in Richtung des Pfeils D2 an das Gehäuse 50 gekoppelt.

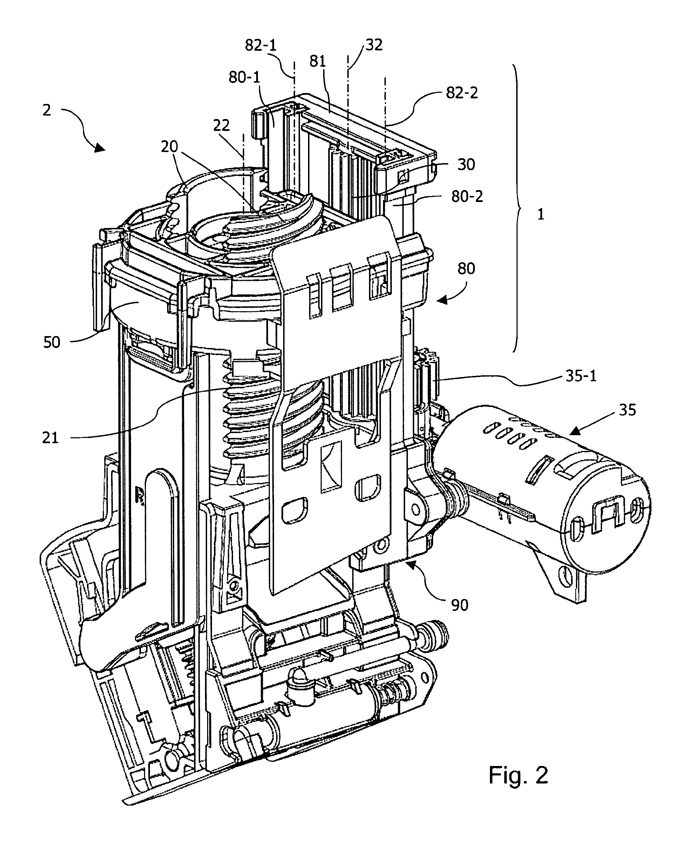

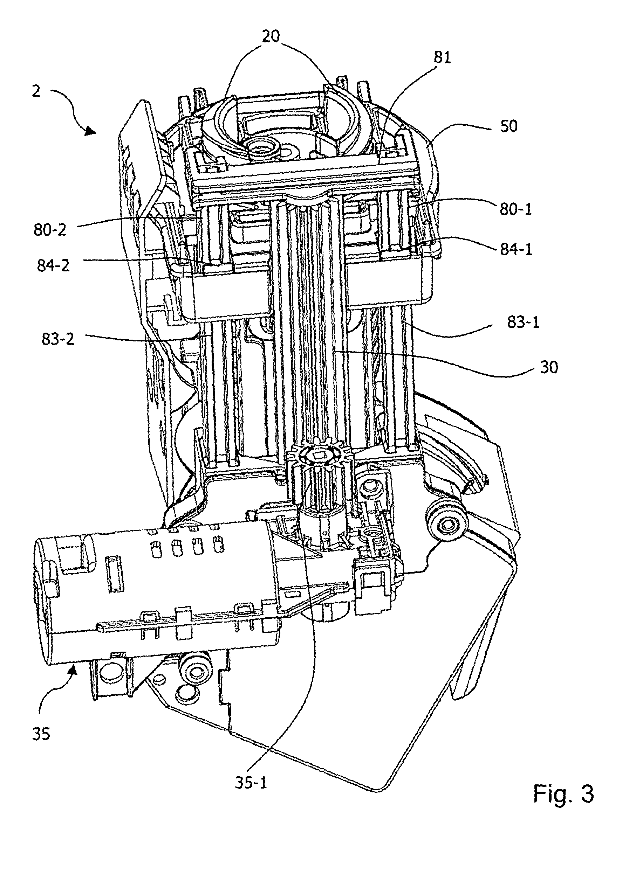

Die Fig. 2 und 3 zeigen die Kaffeebrühvorrichtung 2 gemäss Fig. 1 aus verschiedenen Perspektiven. Wie Fig. 2 und 3 zeigen, umfasst der Antrieb 1 eine Linearführung 80, an der das Gehäuse 50 bei seiner Hubbewegung entlang des Führungszylinders 20 geführt ist. Dazu steht das Gehäuse in einer nachfolgend noch näher zu erläuternden Weise mit der Linearführung 80 in Eingriff. Die Linearführung 80 selbst umfasst zwei Führungsstangen 80-1 und 80-2, die idealerweise ein U- oder H-förmiges Querschnittprofil aufweisen, um deren Biegesteifigkeit zu erhöhen und damit deren Eigenschwingung zu reduzieren. Die Stangen 80-1 und 80-2 sind gegenüber dem Führungszylinder 20 starr an einer Basis 90 der Vorrichtung 2 gelagert. Durch diese Ausgestaltung einer Führung für das Gehäuse 50 wird dessen Schwingungsanfälligkeit und damit dessen mögliche Geräuschentwicklung deutlich weiter reduziert.

Dies wird weiterhin dadurch unterstützt, indem die Führung 80 an der Seite des Gehäuses 50 angebracht ist, an welcher auch die Kraftübertragung vom zweiten Zahnrad 30 auf das erste Zahnrad 10 (hier nicht sichtbar) stattfindet. Dadurch wird ein leichtes Verkanten und in der Folge eine sprunghafte Bewegung des Gehäuses 50 an der Linearführung selbst ausgeschlossen.

Zur besonders schwingungsarmen Lagerung des zweiten Zahnrads 30 ist die dabei so ausgestaltet, dass die oberen Enden der Führungsstangen 80-1 und 80-2 über einen Ausleger 81 miteinander verbunden sind. Die Drehachse 32 des zweiten Zahnrads 30 ist zum einen an diesem Ausleger 81 und zum anderen an der Basis 90 gelagert, wodurch die Führung 80 auch zur schwingungsfreien Aufhängung dieses Zahnrads 30 dient, zumal die Drehachse 32 des zweiten Zahnrads 30 an entgegengesetzten Enden sowohl an der Basis 90 als auch am Ausleger 81 jeweils in einem vorgegebenen Abstand relativ zur Linearführung 80 bzw. relativ zu den Führungsstangen 80-1 und 80-2 gehalten ist. Auf diese Weise ist die Drehachse 32 des zweiten Zahnrads 30 besonders wirksam gegen Verkippungen bzw. Verbiegungen relativ zur Linearführung 80 gesichert. Gleichzeitig bilden die Führung 80 und das zweite Zahnrad 30 eine besonders kompakte und platzsparende gemeinsame Baueinheit, die sich nicht negativ auf die Bauhöhe der Kaffeebrühvorrichtung 2 auswirkt, d.h. die Bauhöhe der Kaffeebrühvorrichtung nicht vergrössert.

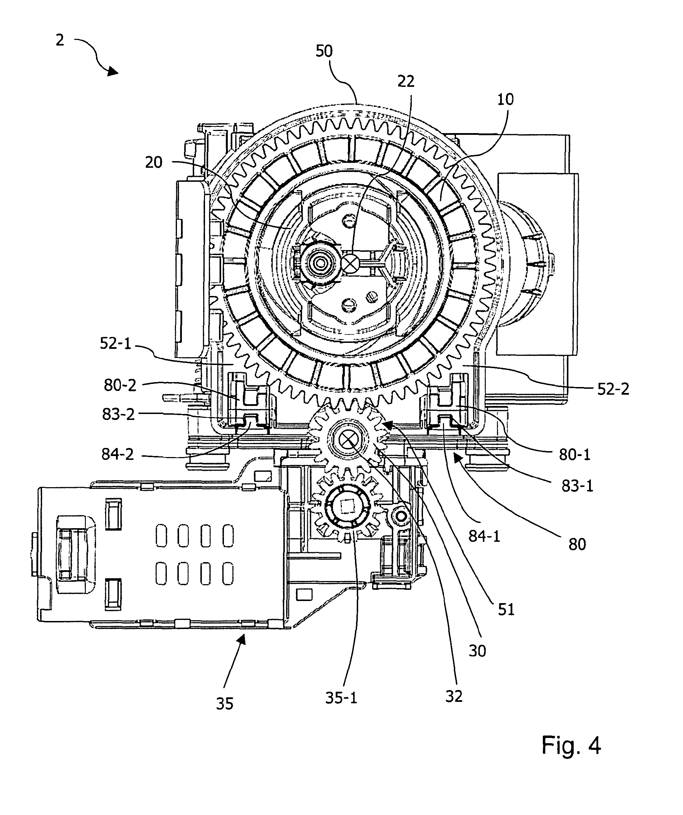

Die Figur 4 zeigt schliesslich eine Draufsicht auf die Kaffeebrühvorrichtung 2 der Figur 1 bei geöffnetem Gehäuse 50. Zu Erkennen sind wieder das erste Zahnrad 10, das in dem Gehäuse 50 gelagert ist. Das erste Zahnrad 10 wird durch das zweite Zahnrad 30 in Drehung versetzt, das wiederum von dem Motor 35 angetrieben ist. Damit lässt sich das erste Zahnrad 10 zusammen mit dem Gehäuse 50 und dem damit gekoppelten Brühkolben 40 in eine Richtung senkrecht zur Blattebene und damit entlang des Führungszylinders 20 bewegen.

Zur Führung des Gehäuses 50 an der Linearführung 80 sind an diesem Gehäuse einstückig mit diesem verbundene Flansche 52-1, 52-2 ausgebildet, die jeweils von einer Führungsstange 80-1 bzw. 80-2 der Linearführung 80 durchgriffen werden. Die Führungsstangen 80-1, 80-2 weisen dabei jeweils ein ungefähr H-förmiges Querschnittsprofil mit einer Nut 83-1 bzw. 83-2 auf, in welche Nuten 83-1 bzw. 83-2 jeweils ein Vorsprung 84-1 bzw. 84-2 eingreift, der an dem Gehäuse 50 ausgebildet ist. Die Führung der Vorsprünge 84-1, 84-2 in der entsprechenden Nut 83-1, 83-2 verhindert dabei eine Schwingungsbewegung des Gehäuses radial zu der Zylinderachse 22, was eine Geräuschreduktion bewirkt. Da sich die Nut 83-1, 83-2 in Richtung des zweiten Zahnrads 30 öffnet, wird der zugehörige Vorsprung 84-1, 84-2 in diese Nut hineingedrückt, sobald sich das zweite Zahnrad 30 dreht und eine Kraft auf das erste Zahnrad 10 und damit auf das Gehäuse 50 ausübt. Dies trägt zu einer Stabilisierung des Eingriffs zwischen Gehäuse 50 und Linearführung 80 bei, was eine Schwingungsbildung ausschliesst.

Der Ausleger 81 ist im vorliegenden Fall starr mit jeder der Führungsstangen 80-1 und 80-2 verbunden. Da das Gehäuse 50 mit der Linearführung 80 bzw. der jeweiligen Führungsstange 80-1 bzw. 80-2 so in Eingriff steht, dass eine Bewegung des Gehäuses 50 gegenüber der jeweiligen Führungsstange 80-1 bzw. 80-2 jeweils in einer zur Zylinderachse 22 radialen Richtung verhindert ist und da die Drehachse 32 des zweiten Zahnrades 30 in einem vorgegebenen Abstand relativ zur Linearführung 80 bzw. zu der jeweiligen Führungsstange 80-1 bzw. 80-2 angeordnet ist, ist im vorliegenden Fall gewährleistet, dass der Abstand zwischen der Zylinderachse 22 bzw. der Drehachse des ersten Zahnrades 10 und der Drehachse 32 des zweiten Zahnrades 30 konstant gehalten ist, unabhängig von der Lage des Brühkolbens 40 bzw. des ersten Zahnrades 10 entlang der Zylinderachse 22. Das erste Zahnrad 10 ist somit gegenüber dem zweiten Zahnrad 30 während einer Hubbewegung entlang der Zylinderachse 22 (innerhalb vorgegebener Toleranzen) geführt.

Durch die Ausbildung der Flansche 52-1, 52-2 kann das erste Zahnrad 10 zudem vollständig von dem Gehäuse 50 umschlossen sein, so dass eine verbleibende Geräuschentwicklung nicht nach aussen dringt. Eine Öffnung 51 in dem Gehäuse 50 ist nur so gross gewählt, wie es für die Wirkverbindung zwischen erstem und zweitem Zahnrad 10, 30 erforderlich ist, um auch hier eine Geräuschdämmung zu erzielen.

Eine weitere Geräuschreduktion wird dadurch erzielt, dass ein Übersetzungsverhältnis zwischen dem ersten Zahnrad 10 und dem zweiten Zahnrad 30 zwischen 4,0 und 4,5 gewählt ist, so dass ein kraftvollerer Antrieb gewährleistet ist, der Reibungskräfte zwischen dem ersten Zahnrad 10 und dem Gehäuse 50 leicht überwindet, sodass sprunghafte Drehbewegungen und somit Schwingungen, die bevorzugt durch sprunghafte Drehbewegungen erregt werden können, vermieden werden.

Die Kaffeebrühvorrichtung 2 lässt sich vorzugsweise gummigelagert an einem Grundträger anbringen, um eine Schwingungsübertragung auf ein Gehäuse auszuschliessen. Der hier nur beispielhaft gezeigte Antrieb 1 lässt aber schon allein eine deutliche Geräuschreduktion zu, ist zudem konstruktiv einfach und kompakt aufgebaut und damit kostengünstig herzustellen.

## Patentansprüche

1. Antrieb (1) für eine Kaffeebrühvorrichtung (2), umfassend:
- ein erstes Zahnrad (10) mit einem Innengewinde (11), über welches dieses erste Zahnrad (10) an einem Aussengewinde (21) eines Führungszylinders (20) drehbar gelagert ist, so dass das erste Zahnrad (10) bei einer Drehung entlang einer Zylinderachse (22) des Führungszylinders (20) bewegbar ist;
- ein zweites Zahnrad (30), welches zum Antreiben des ersten Zahnrades (10) entlang der Zylinderachse (22) mit diesem ersten Zahnrad (10) in Eingriff steht;
- ein Gehäuse (50), in welchem das erste Zahnrad (10) aufgenommen ist,
- einem Brühkolben (40), welcher an das Gehäuse (50) gekoppelt ist, so dass dieser Brühkolben (40) zusammen mit dem ersten Zahnrad (10) entlang der Zylinderachse (22) bewegbar ist,
**dadurch gekennzeichnet, dass**
der Antrieb (1) eine Linearführung (80) zur Führung des Gehäuses (50) umfasst, welche in einem Abstand parallel zur Zylinderachse (22) verläuft und mit welcher das Gehäuse (50) so in Eingriff steht, dass eine Bewegung des Gehäuses (50) gegenüber der Linearführung (80) in einer zur Zylinderachse (22) radialen Richtung verhindert ist,
und eine Drehachse (32) des zweiten Zahnrades (30) in einem vorgegebenen Abstand relativ zu der Linearführung (80) angeordnet ist.

2. Antrieb (1) nach Anspruch 1, welcher eine Basis (90) aufweist, mit der ein unteres Ende der Linearführung (80) und ein unteres Ende des Führungszylinders (20) starr verbunden ist.

3. Antrieb (1) nach einem der Ansprüche 1 bis 2, bei welchem die Linearführung (80) an einer Seite des Gehäuses (50) verläuft, die dem zweiten Zahnrad (30) zugewandt ist.

4. Antrieb (1) nach einem der Ansprüche 1 bis 3, bei welchem die Linearführung (80) mindestens eine Führungsstange (80-1, 80-2) umfasst, die wenigstens teilweise von dem Gehäuse (50) umgriffen sind.

5. Antrieb (1) nach Anspruch 4, bei welchem die jeweilige Führungsstange (80-1, 80-2) mindestens eine axial verlaufende Nut (83-1, 83-2) aufweist, in die ein jeweils am Gehäuse (50) ausgebildeter Vorsprung (84-1, 84-2) eingreift.

6. Antrieb (1) nach Anspruch 4 oder 5, bei welchem ein unteres Ende einer Drehachse (32) des zweiten Zahnrades (30) an der Basis (90) und ein oberes Ende dieser Drehachse (32) an einem Ausleger (81) befestigt ist, welcher starr mit mindestens einer der jeweiligen Führungsstangen (80-1, 80-2) verbunden ist.

7. Antrieb (1) nach Anspruch 5, bei dem die Nut (83-1, 83-2) in Richtung des zweiten Zahnrades (30) geöffnet ist.

8. Antrieb (1) nach einem der Ansprüche 4 bis 7, bei welchem die jeweilige Führungsstange (80-1, 80-2) ein U- oder H-förmiges Querschnittsprofil aufweist.

9. Antrieb (1) nach einem der Ansprüche 1 bis 8, bei welchem das Gehäuse (50) einstückig daran ausgebildete Flansche (52-1, 52-2) aufweist, über welche es mit der Linearführung (80) in Eingriff steht.

10. Antrieb nach einem der Ansprüche 1-9, wobei zwischen dem Gehäuse (50) und dem ersten Zahnrad (10) ein Drehlager (60) ausgebildet ist, das eine radiale Bewegung des Gehäuses (50) gegenüber dem ersten Zahnrad (10) verhindert.

11. Antrieb (1) nach Anspruch 10, bei welchem das Gehäuse (50) und das erste Zahnrad (10) so geformt und angepasst sind, dass diese das Drehlager (60) bilden.

12. Antrieb (1) nach einem der Ansprüche 10 oder 11, bei welchem das Drehlager (60) durch einen umlaufenden Anschlag (61) am Gehäuse (50) gebildet wird, gegen den ein zylindrischer Fortsatz (62) des ersten Zahnrads (10) anliegt.

13. Antrieb (1) nach einem der Ansprüche 1-12, bei welchem das Gehäuse (50) das erste Zahnrad (10) vollständig umschliesst, mit Ausnahme einer Öffnung (51), welche für den Eingriff des zweiten Zahnrades (30) erforderlich ist.

14. Antrieb (1) nach einem der Ansprüche 1-13, bei welchem der Brühkolben (40) über eine Metallplatte (70), welche sich in einer radial zur Zylinderachse (22) verlaufenden Ebene erstreckt, an das Gehäuse (50) gekoppelt ist.

15. Antrieb (15) nach Anspruch 14, bei welchem die Metallplatte (70) wenigstens einen Teil des Gehäuses (50) und/oder des Brühkolbens (40) durchdringt.

16. Antrieb (1) nach einem der Ansprüche 1 bis 15, bei dem ein Übersetzungsverhältnis zwischen dem ersten Zahnrad (10) und dem zweiten Zahnrad (30) in einem Bereich zwischen 4 und 4,5 liegt.

17. Kaffeebrühvorrichtung, **gekennzeichnet durch** einen Antrieb (1) nach einem der Ansprüche 1 bis 16.

18. Kaffeebrühvorrichtung nach Anspruch 17, bei welchem der Antrieb (1) über ein Dämpfungselement an einem Grundträger befestigt ist.

19. Kaffeebrühvorrichtung nach Anspruch 18, wobei das Dämpfungselement aus einem Gummimaterial besteht.
